# EUROPEAN PATENT APPLICATION

(11) **EP 0 723 834 A1**
(43) Date of publication of application: **31.07.1996**
(21) Application number: 96300239.9
(22) Date of filing: 11.01.1996
(51) Int. Cl.: B23K 26/06, G02B 27/09, H01S 3/00, H01S 3/106

(54) **Laser apparatus**

(30) Priority: 25.01.1995 GB 9501412
(71) Applicant: LUMONICS LTD., Swift Valley Rugby Warwickshire, CV21 1QN (GB)
(72) Inventor: Goethals, Walther A.E., Rugby, Warwickshire CV22 7SX (GB)
(74) Representative: Kensett, John Hinton

(57) **Abstract**

A laser system for providing a focussed laser beam of variable diameter substantially at a fixed focus plane, comprises laser means (1) for providing an output beam, and an optical system for converting the output beam to a focussed beam, wherein the optical system includes an afocal variable magnification telescope (3) comprising at least first and second lens elements (A) spaced apart and arranged to be moved together whilst maintaining substantially fixed spacing between them, and a third lens element (B) interposed between the first and second lens elements so that movement of the first and second lens elements relative to the interposed lens element varies the magnification of the optical system to alter the diameter of the focussed beam (D3) substantially without changing the axial position (Z) of beam focus.

## Description

This invention relates to laser apparatus. In particular, it relates to laser apparatus for providing an output beam of variable diameter or spot size.

Lasers are often used for material processing such as cutting, welding or drilling. In such processes, it is important to be able to control the diameter of the light beam provided by the laser for optimum processing results. The beam of a laser may typically be around 10mm or so in diameter and often has to be reduced down to 1mm or less, typically by means of a focussing lens. Clearly, for hole drilling, the diameter of the focussed beam (ie. the spot size) determines the size of the drilled hole. Control of spot size is also essential for many processes, including cutting and welding, for optimising the process. It is desirable to be able to change the spot size of the output beam provided by the laser continuously and easily.

Three main ways of altering spot size are available. Firstly, separate focussing lenses of different focal length may be used. This necessitates a change of lens with each use and also, of course, moves the focal plane axially. Secondly, the target point can be moved axially toward and away from the focus point. However, the fact that the operator may then be working off-focus leads to a loss of precision. Thirdly, separate afocal beam-expanding telescopes (BETs) with different fixed magnification factors may be located between the laser and a focus lens for example. An afocal telescope has no optical power, so that a collimated input beam produces a collimated output beam.

Many laser systems use telescopes for collimating, magnifying or de-magnifying their output beams, eg. to change spot size after a final focussing lens. Typically, a range of telescopes with different fixed magnifications are provided, from which a user can select a specific one for each different purpose. Alternatively, variable focal length/magnification optical units have been used which allow the user to select the beam diameter best suited to his needs. Such telescopes represent an improvement over fixed magnification units by not requiring the replacement of a telescope each time the laser is put to a different use but do still have limitations in performance and/or ease of use. In particular, a problem with variable telescopes up to now has been that as the magnification is altered, the collimation alters and thus continual adjustment is also necessary. Telescopes of the variable type therefore utilise two separate controls. One of these alters the magnification and the other is used to correct either the focal plane of a subsequent lens or collimation. Clearly, the use of two controls is cumbersome, can lead to inaccuracy and is not best suited to automatic or motorised controls.

It is also common for laser systems to use fibre optic beam delivery. In such systems, a flexible optical fibre of high transmission and with small core size is used to guide a laser beam to a remote work area. Typically, the optical fibres used are of 50-1000 µm core diameter and of several metres length. The laser beam is coupled into the fibre core through a face at one end. Inside the fibre the beam propagates to the output end without significant loss in well-known manner. The beam is often coupled into the fibre core by means of a telescope of fixed magnification and a focus lens. For output coupling a magnified or demagnified image of the output face of the fibre is relayed onto a workpiece, for example by means of an imaging system often comprising two lenses. Because these optical coupling schemes have fixed magnification, it is not readily possible either to adjust the spot size on the input face of the optical fibre to match the core diameter of the fibre, or to adjust the spot-size on the workpiece to optimise laser processing performance. In each case, easily adjustable telescopes, which do not significantly alter beam collimation, would be desirable to facilitate precise adjustment of spot-size.

The present invention arose in an attempt to provide an improved optical system and laser system in which the laser beam diameter or focus spot size can be varied easily and without significant change of beam collimation or focal plane.

According to the present invention there is provided a laser system for providing a focussed laser beam of variable diameter substantially at a fixed focus plane, comprising laser means for providing an output beam, and an optical system for converting the output beam to a focussed beam, wherein the optical system comprises at least first and a second lens elements spaced apart whilst maintaining substantially fixed spacing between them, and a third lens element interposed between the first and second lens elements so that movement of the first and second lens elements relative to the interposed lens element varies the magnification of the optical system to alter the diameter of the focussed beam substantially without changing the axial position of the focus plane.

According to the present invention there is further provided a laser system comprising an active laser element having thermal lens power induced by excitation thereof, an optical system having optical power and a resonator, wherein the optical system and the laser element are mounted within the resonator to provide a laser output beam from the resonator, the optical system comprising at least first and second lens elements which are spaced apart whilst maintaining substantially fixed spacing between them, and a third lens element interposed between the first and second lens elements so that relative movement between, on the one hand, the first and second elements and, on the other hand, the third element, alters the optical power, the optical system being arranged relative to the laser element so that the optical power of the optical system can be varied to be substantially opposite to the thermal lensing power induced in the laser element so as to compensate for the thermal leasing power.

Embodiments of the invention will now be described, by way of example only, with reference to the accompanying drawings, in which:
Figure 1 is an explanatory diagram;
Figure 2 shows a schematic configuration of an afocal variable magnification telescope;
Figure 3 shows the use of a telescope in a laser system;
Figure 4 shows two practical embodiments of the system of Figure 3;
Figure 5 shows the use of an optical system according to the invention in a laser system using optical fibre beam delivery;
Figure 6 shows a further use of an optical system according to the invention in a laser system using optical fibre beam delivery;
Figure 7 shows a laser resonator.
Figure 8 shows the combination of an afocal variable magnification telescope with a negative lens;
Figure 9 shows in more detail an embodiment of an afocal variable magnification telescope;
Figure 10 shows a graph of optical performance;
Figure 11 shows schematically a computer controlled optical system; and
Figure 12 shows schematically a further computer controlled optical system.

Variable focus lens systems have been in existence in general optical fields for many years. The first development of these was the telephoto lens which is usually defined as having the property of an effective focal length which is significantly larger than its back focal length. However, the telephoto lens also generally has a variable focal length. The telephoto lens is one example of a mechanically-compensated zoom lens, that is, a zoom lens that has two or more optical elements that are moved independently of each other to achieve zoom characteristics (ie. change of focal length while maintaining the image in a fixed plane). To move the lens elements simultaneously to achieve zooming generally involves complex mechanisms such as cams having non-linear related movements.

An improvement over mechanically-compensated zoom lenses is represented by optically-compensated zoom lenses. This type of lens has one or more moving elements but, importantly, only one controlling movement is required. Where more than one lens element is axially shifted, a direct constant linkage connects these lens elements together so that their spacing remains constant over the extent of their movement. Although it is impossible to maintain an image plane precisely fixed regardless of magnification, optically-compensated lenses are able to minimise the oscillation (ie deviation) of the actual image plane about the intended image plane over the zoom range and also to control aberrations and provide a useful range in focal length amongst other advantages. Optically-compensated lenses are described in Clark A D, Monographs on Applied Optics No. 7 'Zoom Lenses', American Elsevier (1973), and in Kingslake R, 'Lens Design Fundamentals', p60-70, Academic Press Inc, London (1978).

One known optically-compensated zoom lens design is described in UK patent no. 750,550. This design uses two negative lenses moving around a stationary positive element with a further stationary positive element at the front. It was found that this 4-element zoom unit reduced the oscillations of the image plane and led to 4 points of correct focus through the zoom range as magnification was increased. Progressive developments in technology have led to progressive increases in focal range and aperture. Optically compensated zoom lenses can now quite easily have a 3:1 optical range and an aperture down to F/1.00. Such optically-compensated lenses are frequently used in generally photographic technology such as photography and cinephotography, broadcast television, CCTV, microscopes, microfilm readers and telescopes. Uses of them to date have therefore been to alter the size of an image, and they have not been used in systems in which it is the properties of an optical beam itself which is under consideration.

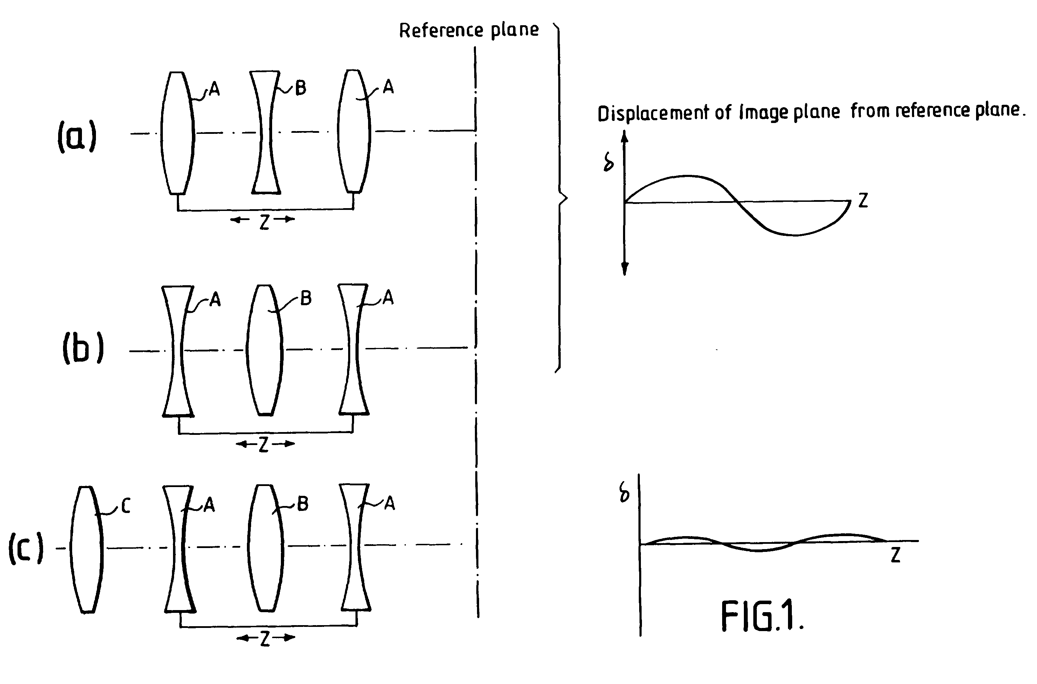

Figure 1 shows schematically examples of optically-compensated zoom units. Each of the examples shown in Figure 1 comprises a pair of moving lenses A of the same type which are coupled together so as to move through equal distances while maintaining fixed spacing from one another throughout the zoom range. Interposed between these lenses is a lens B of a second type. Figure 1(a) shows a stationary concave lens B interposed between two convex lenses A. Figure 1(b) shows a stationary convex lens B interposed between two concave lenses A. While the lenses A are moved with respect to lens B, it is impossible for the image plane to remain completely stationary; instead it oscillates backwards and forwards about the intended (reference) plane by a small amount. The graphs alongside each optical unit in Figure 1 illustrate the deviation of the corresponding image plane from the fixed reference plane as the lenses A are moved through the zoom range. The graphs illustrate that for three-lens units of the type shown in Figures 1(a) and 1(b), there are three positions in the zoom range where the image plane coincides with the reference plane (ie three positions of 'correct focus'). By comparison Figure 1(c) shows a four-lens unit which is designed to have four positions of correct focus in the zoom range. Thus a four-lens system is usually, but not necessarily, preferable since not only does the image plane coincide with the reference plane more often over the zoom range but, more importantly, the maximum excursion of the image plane from the reference plane is much reduced compared to a three-lens design. This improvement was demonstrated in a comparative study of Kingslake, reported by Clark, for three-lens and four-lens designs in which a lens movement (ie zoom range) of 3.0 inches induced a change in overall focal length from 2.0 inches to 8.0 inches. In this case the total excursion of the image plane was 0.1014 inches for the three-lens design, but was only 0.0032 inches for the four-lens design. Thus four-lens optically-compensated zoom units are capable of maintaining an associated image plane essentially fixed throughout the zoom range, compared to their focal length.

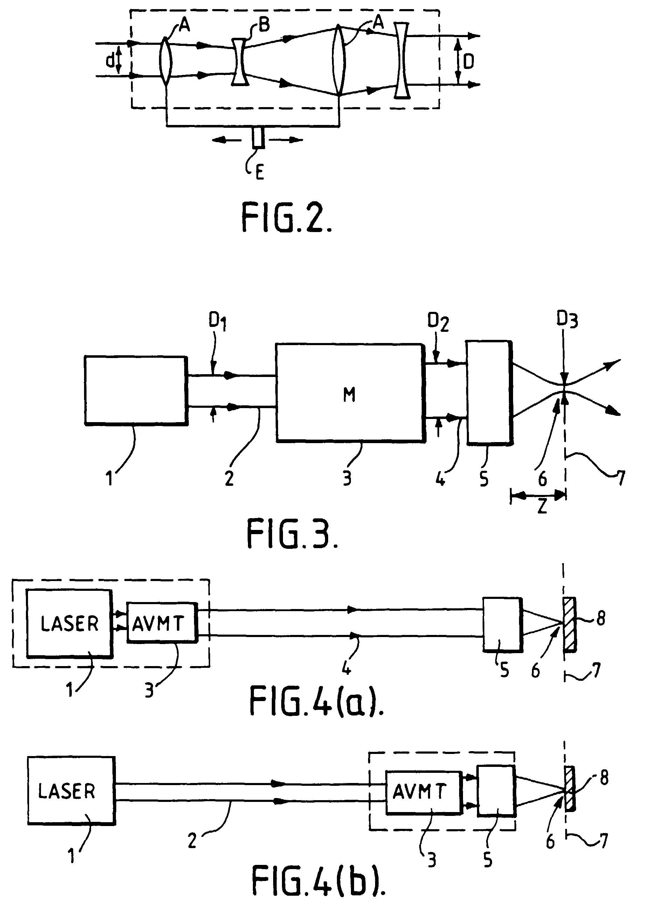

Figure 2 is a schematic diagram illustrating how an optically-compensated unit of four-lens design can act as a telescope to convert a collimated input beam of diameter d to a collimated output beam of diameter D. The two lenses A are connected together by any suitable fixed linkage and may be moved simultaneously by an adjustment control E. This movement may either be manual or may be motorised, in which case it may be computer controlled. Movement of the lenses A alters the diameter D of the output beam and therefore alters the output beam width if the optical arrangement is applied to a laser. Note that in the example of Figure 2, two fixed negative or concave elements are provided and two linked positive (or convex) movable elements. Embodiments of the invention are not, of course, restricted to this configuration or to having only four elements. There could be more or less than four elements included. Furthermore, the elements are shown as singlet lenses, however, it may be preferable in some circumstances to use elements other than singlet lenses. It is also possible in some embodiments for the two linked elements to be stationary and the interposed element to be moved relative to them.

In practice, the afocal variable magnification telescope (AVMT) of Figure 2 for example will usually be used in association with a further optical (usually focussing) element. Figure 3 shows such a system. In this system, a laser source 1 produces a substantially collimated beam 2 having nominally fixed diameter D₁. The laser source may be an Nd:YAG laser, typically of 1064nm operation. However, lasers operating at other wavelengths or other types of laser may, of course, be used with the present invention. The type of laser and wavelength is determined only by the availability of suitable high-transmission refractive optical materials for the optical elements. The collimated beam from the laser is applied to the AVMT 3 which acts as a zoom device as described previously to convert beam 2 into an output beam 4 of progressively variable diameter D₂. This is then applied to a focussing element 5 which in this example is a positive (convex) optical element. This focussing element then creates a beam focus 6 of diameter, ie. spot size, D₃ at the focal plane 7 of the element. Since AVMT 3 is an afocal telescope, the output beam 4 is also collimated and, because the AVMT is a zoom device, output beam 4 remains substantially collimated when D₂ varies as a result of changing the magnification M of the AVMT. It is well known that spot size D₃ is inversely proportional to beam diameter D₂. Consequently, a change in magnification M directly results in a corresponding change in spot size D₃. However, the position Z in the focal plane is substantially unchanged. Therefore, the AVMT 3 is used to change the spot size provided by a laser without altering the focus position at plane 7.

Figure 4 shows two ways in which the combination of Figure 3 may be applied. In Figure 4(a), the AVMT 3 is located in the path of the output beam and substantially adjacent the laser source 1. The output beam 4 is then directed along an optical beam delivery path. This may be a straight line path but will more usually be a combination of free spaces and beam-turning mirrors (not shown) culminating in a focussing element 5 for focussing the beam onto a workpiece 8. The front face of workpiece 8 lies along the focus plane 7 at beam focus 6. Figure 4(b), on the contrary, shows the laser output beam entering directly the beam delivery path 2. The AVMT in this example is located at the distal end of the beam delivery path adjacent the focussing element 5. It will be appreciated that in other embodiments not shown the AVMT may be at any position along the optical path and need not be at or adjacent either end.

The beams 2 and 4 shown in Figure 4 are shown as generally having constant diameter over the optical beam delivery path. In practice, there will generally be a small increase in beam diameter as propagation distance increases. However, this does not affect significantly the performance of the system; the essential principle still stands, namely that a change in magnification M of the AVMT creates a corresponding change in spot size D₃ on the workpiece 8.

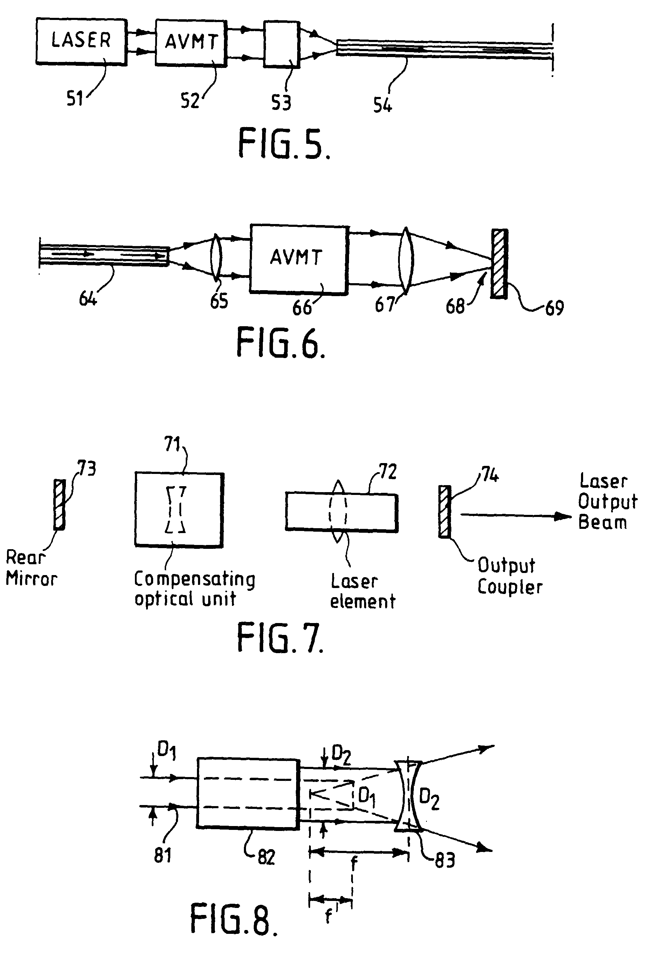

As described above, it is becoming common for laser systems to use fibre optic beam delivery. Apparatus according to the invention is particularly advantageous when used with fibre optic beam delivery systems and two embodiments are shown in Figures 5 and 6. Conventionally, the beam from a laser source has to be focussed onto the input face of an optical fibre. In order to ensure that all the beam power enters the fibre, the spot size on the input face must be less than the diameter of the fibre core. Having entered the core, the beam then propagates to the output face of the fibre where it diverges. It is then usual to image the output face of the fibre (magnified or, more usually, de-magnified) onto a workpiece. At the input end, the beam from the laser source has to be very precisely focussed onto the core of the fibre, typically by a focussing unit which may comprise a fixed magnification telescope and a focus lens. However, it is often very difficult to assemble the appropriate combination of optical elements to precisely match the input angle and spot size of the laser beam to the acceptance characteristics of the fibre. Thus, each system often has to be custom-made. This problem is overcome in the embodiments of the present invention by incorporating an AVMT 52 between the output of a laser 51 and a focus lens 53. The spot size of the beam on the input face of an optical fibre 54 can then easily be set precisely to the required value merely by varying the magnification of the AVMT by one adjusting means. At the output end of a fibre the beam diverges and therefore generally has to be focussed onto a workpiece by an imaging system. Up to now, an imaging system chosen has generally had fixed magnification and therefore the spot size on the workpiece also was of a fixed size. By using an AVMT of the present invention, the spot size may be variable as shown in Figure 6. In Figure 6, the output beam from the output end of a fibre 64 is collimated by a collimating lens 65 and applied to an AVMT 66. The output from the AVMT passes through a focussing lens 67 onto a target 69 located in the focal plane of lens 67. The spot size of the focussed beam 68 varies inversely with the variable magnification of the AVMT, and the axial position of beam focus 68 remains substantially fixed as magnification is changed.

It will be appreciated that in an embodiment which combines Figures 5 and 6 an AVMT may be mounted both in the input and output beams of a fibre.

Embodiments of the present invention are not restricted to an afocal zoom magnifying telescope being provided at some point in the output beam of a laser source. In some embodiments, the telescope may be inside the resonator of a laser oscillator. It is well known that, because of finite thermal conductivity of solid state active laser media, when such media are operated above fairly modest input (ie. excitation) levels, a positive temperature gradient develops between the longitudinal axis and the wall of the laser element. As a result of this, and particularly when the laser medium is cylindrical, it often exhibits positive optical power (ie. behaves as a positive lens). This tends to degrade the laser performance. This effect is well known and is often termed thermal lensing. In order to compensate for thermal lensing, it is known to incorporate compensating optical units in the resonator. These units have opposite optical power (eg. negative) in order to achieve the desired state of zero net optical power within the resonator. An example of this is shown schematically in Figure 7 in which the compensating optical unit 71 is mounted alongside a laser element 72 in an optical resonator between a rear mirror 73 and an output coupler 74. Typical known compensating devices include a single negative lens or a pair of lenses (one positive, one negative) of variable spacing to provide a variable power negative lens. The single negative compensating lens is severely limited in that it can only compensate for a single thermal lens value corresponding to a single level of excitation of the laser medium. Systems in which a compensating lens pair is provided also tend to suffer from similar limitations since, once set, the lenses then have a fixed optical power. There is therefore a requirement for an optical unit which can be progressively variable in optical power in situ. Most preferably, this should be motorised and preferably computer controlled so as to permit active compensation at any laser excitation level.

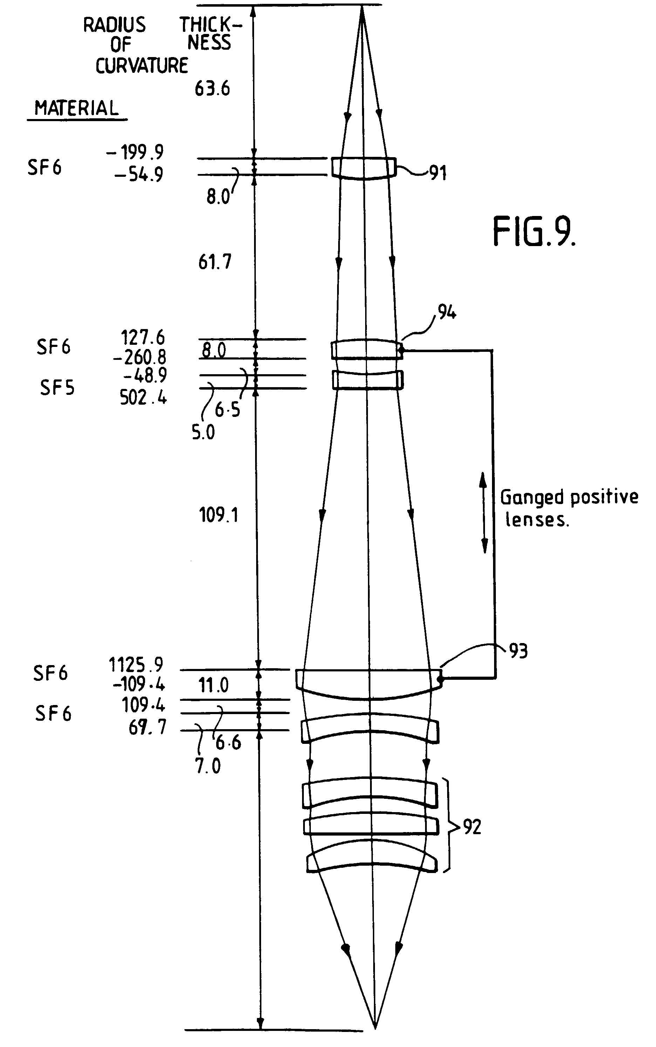

Figure 8 shows how an AVMT according to the present invention may be used to satisfy the requirement for a variable compensating optical unit. A combination of an AVMT 82 and a negative lens 83 is provided in the resonator. A collimated input beam 81 of diameter D₁ passes through the AVMT at a magnification M to form an output beam of diameter D₂ which is then applied to the lens 83 of focal length f. A simple comparison of similar triangles in the figure shows that D₂/f equals D₁/f' where f' is the effective focal length of the complete optical system. Since M equals D₂/D₁, it is evident that f' equals f/M. Thus, the complete unit has a variable negative optical power since f is negative and M is progressively variable. Hence, the unit of Figure 8 may be applied to replace the compensating unit 71 of Figure 7 to achieve zero net optical power within a laser resonator over a significant range of excitation levels to the laser element.

Figure 9 shows one design of an AVMT in detail. The AVMT in Figure 9 is shown in conjunction with a positive input lens 91 and a positive output lens assembly 92. It is intended for use in conjunction with an Nd:YAG laser, typically for a configuration such as that shown in Figure 6 for coupling the output beam of an optical fibre onto a workpiece. The optical prescription of the main elements is shown by the side of the figure; the radius of curvature of each surface is shown, together with the thickness and glass type of the primary lenses. The travel of the two linked positive lenses 93 and 94 is 101mm. The input aperture of such an assembly is approximately 25.4mm and the output aperture 50.8mm. The zoom magnification range of such a system is approximately x 0.5 to x 1.5.

In other embodiments the magnification may be altered by a factor of two or more for example.

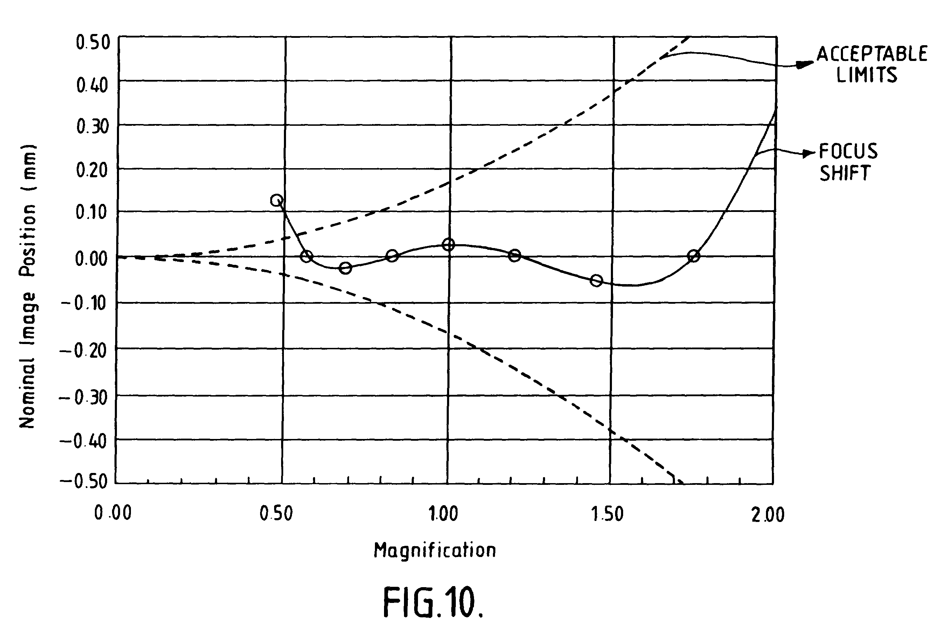

Figure 10 is a graph showing the expected shift of the focus or image plane over the zoom magnification range. This is generally well within limits which are normally considered to be acceptable. Visually, no departure from sharp image focus could be observed in trials of such a system over the full zoom magnification range. The deviations shown in Figure 10 over the magnification range of x0.5 - x1.5 at least are virtually insignificant in practice.

It is known to design optical systems capable of operating (eg. focussing) at two different wavelengths simultaneously, and such designs may be beneficial when used in the AVMT of the present invention.

The movement of the lens elements may be effected by electric, pneumatic or hydraulic apparatus for example, and is preferably, as stated above, computer controlled. For instance, a look-up table may be provided, storing values of lens position over a range of lamp input powers, or the computer may form part of a feedback loop having a monitor for monitoring a parameter of the output beam or the performance of a process performed using the laser. The computer may be arranged to respond to monitored values to adjust the AVMT to optimise the parameter or the process.

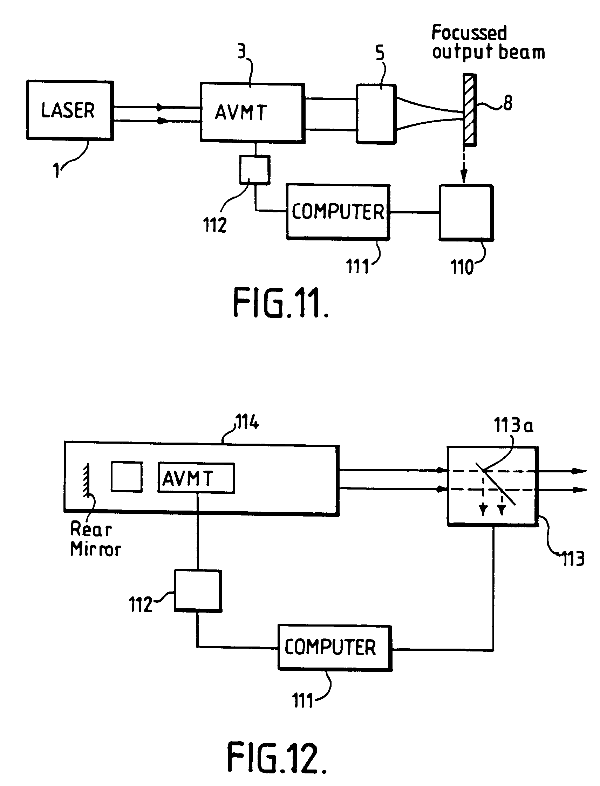

A schematic example is shown in Figure 11, where a monitor 110 monitors a process performed on a workpiece 8 by the output beam from a laser optical system as shown in Figure 3, and passes an output signal to a computer 111. Computer 111 controls an AVMT adjustment means 112 which, by electrical, pneumatic or hydraulic adjustment for example, shifts the movable lens element or elements of the AVMT to optimise the monitored process, by ensuring that the monitor signal either stays within defined limits or satisfies prescribed criteria; A minimum or maximum value of the monitored signal may be desired for example. The monitor 110 may be one which optically or otherwise remotely observes the interaction of the beam with the front surface of workpiece 8 or may be in contact with the workpiece, eg. arranged to detect acoustic signals by a pick-up arrangement.

A further example of a computer-controlled system is shown in Figure 12. A transmissive beam monitor 113 monitors a parameter (such as laser power or beam divergence) of the output beam from a laser system 114. Beam monitors such as monitor 113 are well known and often comprise a partially transmissive mirror 113a which reflects part of the beam as a sampling beam. Laser system 114 incorporates a laser resonator as shown in Figure 7 and the optical assembly of Figure 8, and the monitor 113 provides an output signal indicative of the monitored parameter to a computer 111. This controls an AVMT adjustment means 112 to shift the movable element or elements of the AVMT to optimise the monitored beam parameter.

## Claims

1. A laser system for providing a focussed laser beam of variable diameter substantially at a fixed focus plane, comprising laser means (1) for providing an output beam, and an optical system for converting the output beam to a focussed beam, characterised in that the optical system comprises at least first and second lens elements (A) spaced apart whilst maintaining substantially fixed spacing between them, and a third lens element (B) interposed between the first and second lens elements so that relative movement between the first and second lens elements on the one hand and the interposed lens element on the other hand varies the magnification of the optical system to alter the diameter (D3) of the focussed beam substantially without changing the axial position (Z) of the focus plane.

2. A laser system as claimed in Claim 1 including optical fibre means (54) for delivering the output beam to a remote location, wherein the optical system is positioned in the optical path before the optical fibre means and converts the output beam to a focussed beam on an input face of the optical fibre means, so as to cause onward propagation of the output beam through the optical fibre means.

3. A laser system as claimed in Claim 1 including optical fibre means (64) for receiving the output beam at an input face and delivering it from an output face to a remote location, wherein the optical system is positioned in the optical path after the optical fibre means and is arranged to convert the output beam, that emerges from the output face of the optical fibre means, to a focussed beam.

4. A laser system as claimed in any one of the preceding claims and further comprising a focussing optical element (53,65,67).

5. A laser system as claimed in Claim 4 and comprising focussing elements (65,67) respectively preceding and following the first and second lenses.

6. A laser system comprising an active laser element (72) having thermal lens power induced by excitation thereof, an optical system (82,83) having optical power and a resonator, wherein the optical system (82,83) and the laser element are mounted within the resonator to provide a laser output beam from the resonator, characterised in that the optical system comprises at least first and second lens elements (A) which are spaced apart whilst maintaining substantially fixed spacing between them, and a third lens element (B) interposed between the first and second lens elements so that relative movement between, on the one hand, the first and second elements and, on the other hand, the third element, alters the optical power, the optical system being arranged relative to the laser element so that the optical power of the optical system can be varied to be substantially opposite to the thermal lensing power induced in the laser element so as to compensate for the thermal lensing power.

7. A laser system as claimed in Claim 1 or Claim 6, wherein the first and second lens elements are moved simultaneously, whilst maintaining fixed spacing between them, and the third lens element is kept stationary.

8. A laser system as claimed in Claim 6, wherein the optical system further comprises an optical element (83) of negative power.

9. A laser system as claimed in any one of the preceding claims, wherein a single adjustment control is used to move the or each moveable lens element.

10. A laser system as claimed in any one of the preceding claims, wherein the laser means is a solid state laser means.

11. A laser system as claimed in Claim 10, wherein the laser means is an Nd:YAG laser.

12. A laser system as claimed in any one of Claims 1 to 5, wherein the laser means is a gas laser.

13. A laser system as claimed in any preceding claim, wherein the magnification of the optical system is variable by a factor of at least two.

14. A laser system as claimed in any one of the preceding claims comprising electrical, hydraulic or pneumatic means (112) for effecting movement of the or each movable lens element.

15. A laser system as claimed in Claim 14, wherein the movement is controlled by a computer (111).

16. A laser system as claimed in any one of the preceding claims, wherein the optical system is configured to operate simultaneously at two different wavelengths.

17. A laser system as claimed in Claim 15, wherein the computer forms part of a feedback loop (110,111,112).

18. A laser system as claimed in Claim 15, wherein the computer employs a look-up table of optimised settings for the optical system.

19. A laser system as claimed in any one of the preceding claims, wherein the lens elements are singlet lenses.

20. A laser system as claimed in any one of the preceding claims wherein at least one lens element is a multi-element lens.
